# EUROPÄISCHE PATENTSCHRIFT

(11) **EP 3 177 503 B1**
(45) Veröffentlichungstag und Bekanntmachung des Hinweises auf die Patenterteilung: **10.10.2018**
(21) Anmeldenummer: 15734571.1
(22) Anmeldetag: 26.06.2015
(51) Int. Cl.: B62D 15/02, B60W 30/06, G05D 1/00

(54) **VERFAHREN UND VORRICHTUNG ZUM VERBRINGEN EINES FAHRZEUGES IN EINE ZIELPOSITION**
METHOD AND APPARATUS TO CONDUCT A VEHICLE TO A TARGET POSITION
PORCÉDÉ ET DISPOSITIF POUR CONDUIRE UN VÉHICULE À UNE POSITION VISÉE

(30) Priorität: 08.08.2014 DE 102014011796
(43) Veröffentlichungstag der Anmeldung: 14.06.2017
(73) Patentinhaber: Daimler AG, 70327 Stuttgart (DE)
(72) Erfinder: BONNET, Christophe, 70771 Leinfelden-Echterdingen (DE); HILLER, Andreas, 70563 Stuttgart (DE); KUENZEL, Gerhard, 71726 Benningen (DE); MOSER, Martin, 70736 Fellbach (DE); SCHIEMENZ, Heiko, 70597 Stuttgart (DE)
(74) Vertreter: JENSEN & SON
(86) Internationale Anmeldenummer: PCT/EP2015/001289
(87) Internationale Veröffentlichungsnummer: WO 2016/020024

(56) Entgegenhaltungen:
- EP-A2- 2 617 627
- DE-A1-102012 022 087

## Beschreibung

Die Erfindung betrifft ein Verfahren zum Verbringen eines Fahrzeuges in eine Zielposition, wobei von einer Startposition des Fahrzeuges ausgegangen wird.

Aktuelle (semi-)automatische Parksysteme funktionieren nur, wenn sie die anzufahrende Parklücke zumindest teilweise mit einer On-Bord-Sensorik vermessen können. Dabei kann das Fahrzeug seine Position mit Hilfe von fahrzeugeigenen Sensoren in einer gelernten Umgebung feststellen und wird so in die Lage versetzt, eine bereits gefahrene Bahn wieder abzufahren. Allerdings kann eine vom Fahrzeug nicht erfassbare Zielposition nicht angefahren werden.

Aus der EP 1 249 379 B1 sind ein Verfahren und eine Vorrichtung zum Verbringen eines Kraftfahrzeuges in eine Zielposition bekannt, bei welchen das Fahrzeug in eine Startposition nahe der angestrebten Zielposition gebracht wird, nach einer ersten fahrerseitigen Aktivierung die Umgebung des Kraftfahrzeuges zur Detektion der Zielposition fortlaufend abgetastet und die aktuelle Fahrzeugposition fortlaufend ermittelt wird, wobei anhand der ermittelten Umgebungs- und Positionsinformationen Steuerinformationen für das Verbringen des Fahrzeuges in die Zielposition ermittelt werden. Abhängig von einer zweiten fahrerseitigen Aktivierung werden von den Steuerinformationen abhängige Steuerbefehle an den Antriebsstrang und/oder die Bremsanlage und/oder die Lenkung des Kraftfahrzeuges ausgegeben, wodurch das Kraftfahrzeug fahrerunabhängig in die Zielposition fährt.

Die DE 10 2013 015 349 A1 offenbart ein Verfahren und eine Vorrichtung zum Betrieb eines Fahrzeuges, insbesondere zum Anfahren eines Parkplatzes, in einer nicht einsehbaren straßenfernen Parkzone durch das Fahrzeug, bei welchem Umgebungsdaten des Fahrzeuges erfasst werden. Unter Verzicht auf eine On-Bord-Sensorik werden wiederholt anzufahrende Parkplätze ohne Vermessung angefahren und auf diesen regelmäßig genutzten Parkplätzen in den nicht einsehbaren Parkzonen anhand von zuvor erfassten und gespeicherten Umgebungsdaten oder Fahrdaten eingeparkt. Dieses System ist nach wiederholtem Parken in ein- und demselben Bereich selbstlernend, wobei beim Anfahren dieser Parkzone geeignete Informationen, wie ermittelte Fahrdaten oder erfasste Umgebungsdaten, wie Lenk-Gierwinkel, Fahrzeuggeschwindigkeit, GPS-Daten und gefahrene Trajektorie gespeichert und bereits gespeicherte Fahrdaten bzw. Umgebungsdaten aktualisiert werden, so dass das Manöver nachtrainiert werden kann.

DE 10 2012 022087 A1 offenbart die Merkmale des Oberbegriffs des Anspruchs 1. Aufgabe der Erfindung ist es, ein Verfahren und eine Vorrichtung für eine verbesserte Verfügbarkeit des autonomen Parksystems anzugeben.
Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.
Die Aufgabe ist mit einem Verfahren dadurch gelöst, dass
- die Startposition von einem mobilen Endgerät oder dem Fahrzeug ermittelt wird,
- die Zielposition von dem mobilen Endgerät bestimmt wird,
- eine Fahrtrajektorie des Fahrzeuges innerhalb des Fahrzeuges geplant wird,
- ein Abfahren der Fahrtrajektorie des Fahrzeuges durch das Fahrzeug oder das mobile Endgerät initiiert wird.

Dies hat den Vorteil, dass aufgrund der Verwendung des mobilen Endgerätes der Fahrer das vom Fahrzeug durchzuführende Fahrmanöver im Vorhinein abschreiten und die Ausrichtung des Fahrzeuges in der Zielposition festlegen kann. Ein weiterer Vorteil der Erfindung besteht darin, dass keine zusätzlichen Fahrzeugsensoren zur Planung des Fahrmanövers benötigt werden. Die Planung des Fahrmanövers ist für den Fahrer sehr einfach durchführbar. Das von dem mobilen Endgerät aufgezeichnete Fahrmanöver kann der Fahrer anschließend über eine Remote-Bedienung abfahren lassen. Dabei fährt das Fahrzeug autonom ohne Unterstützung des Fahrers.
Die Startposition kann auch durch den Fahrer festgelegt werden, indem er über eine Bedieneinrichtung auf dem mobilen Endgerät die Startposition festlegt. Ebenfalls kann die Startposition kann auch durch das Ereignis "Fahrer öffnet Fahrertür um Auszusteigen" oder "Fahrer legt P am Gangwahlhebel ein" festgelegt werden. Bei einer Aktivierung durch den Fahrer oder durch ein Ereignis ermittelt dann das Fahrzeug oder das mobile Endgerät die aktuelle Position des Fahrzeugs und setzt diese Position als Startposition des Parkvorgangs. Dies hat der Vorteil, dass der Fahrer die Möglichkeit hat ohne großen Aufwand die Startposition zu bestimmen. Die Bestimmung der Startposition kann flexibel und einfach erfolgen.
Vorteilhafterweise wird die Start- oder die Zielposition des Fahrzeuges über eine Ausrichtung des mobilen Endgerätes in einem globalen Koordinatensystem bestimmt. Durch die Verwendung dieses globalen Koordinatensystems lässt sich die Ziel- als auch die Startposition einfach auf das Fahrzeug übertragen und dort weiter verarbeiten.

In der Erfindung erfolgt die Ausrichtung des mobilen Endgerätes in dem globalen Koordinatensystems mittels von dem mobilen Endgerät aufgenommenen Sensordaten, die an das Fahrzeug weitergeleitet werden. Über diese Ausrichtung des mobilen Endgerätes lässt sich einfach die Zielposition des Fahrzeuges darstellen, so dass diese für eine Planung eines Fahrmanövers einfach zu verwenden ist.

In einer Variante wird das mobile Endgerät von der Startposition in die Zielposition verbracht, wobei das mobile Endgerät laufend Daten aufnimmt und für eine Fahrmanöverplanung auswertet. Aufgrund dieser laufend ermittelten Daten wird eine Fahrbahn charakterisiert, welche als Grundlage für ein Fahrmanöver des Fahrzeuges angesehen werden kann.

In einer Ausführungsform werden über das mobile Endgerät während des Fahrmanövers des Fahrzeuges Kurskorrekturen des Fahrzeuges vorgenommen. Dadurch wird eine ständige Überwachung des Fahrmanövers des autonom fahrenden Fahrzeuges durch den Fahrer gewährleistet, wobei der Fahrer bei einer möglichen Kollision in das Fahrmanöver eingreifen kann.
Eine Weiterbildung der Erfindung betrifft eine Vorrichtung zum Verbringen eines Fahrzeuges in eine Zielposition, umfassend ein Steuergerät, welches mit einer Lenkeinrichtung und einer Motorsteuereinrichtung und/oder einer Bremseinrichtung des Fahrzeuges verbunden ist. Bei einer Vorrichtung, mit welcher das Fahrzeug eine von Sensoren nicht erfassbare Zielposition anfahren kann, ist
- ein mobiles Endgerät über eine drahtlose Kommunikationseinrichtung mit dem Steuergerät verbunden, welches eine Startposition oder eine Zielposition des Fahrzeuges ermittelt, und
- das Steuergerät eine Sollbahn auf der Grundlage des von dem mobilen Endgerät Erstellten Fahrmanöverplan bestimmt und die Sollbahn durch Ansteuerung der Lenkeinrichtung und der Motorsteuerung oder der Bremseinrichtung durchführt.

Aufgrund eines von dem mobilen Endgerät vorgeschlagenen Fahrmanövers kann die Vorrichtung eine wirkliche Fahrbahn, welche das Fahrzeug zum Einparken oder Einnehmen der nicht einsehbaren Zielposition abfahren soll, berechnen, auch ohne dass fahrzeugeigene Sensordaten ausgewertet werden müssen.

Vorteilhafterweise umfasst das Steuergerät eine Bahnregeleinrichtung, die mit einer Positionsbestimmungseinrichtung des Steuergerätes verbunden ist, welche eine Startposition des Fahrzeuges ermittelt. Durch die selbstständige Festlegung der Startposition des Fahrzeuges unabhängig von dem mobilen Endgerät wird die Genauigkeit der von dem Steuergerät ausgegebenen Sollbahn verbessert.

Eine weitere Weiterbildung der Erfindung betrifft ein Vorrichtung zur Fahrmanöverplanung eines Fahrzeuges, umfassend eine Recheneinheit. Bei einer solchen Vorrichtung, welche zur Steuerung einer nicht von fahrzeugeigenen Sensoren erfassbaren Zielposition geeignet ist, ist
- die Recheneinheit mit mindestens einem Positionserfassungssensor zur Bestimmung einer Startposition oder einer Zielposition oder einer möglichen Fahrbahn des Fahrzeuges verbunden,
- der mindestens eine Positionserfassungssensor an eine Positionsberechnungeinheit der Recheneinheit geführt ist, die die Position der Vorrichtung in einem globalen Koordinatensystem bestimmt und
- die Positionsberechnungseinheit und eine Positionsbestimmungseinheit mit einer Fahrmanöverplanungseinheit verbunden sind, welche das Fahrmanöver plant und
- die Recheneinheit mit einer Sende-/Empfangseinheit verknüpft ist, welche die Startposition oder die Zielposition oder das geplante Fahrmanöver an das Fahrzeug sendet.

Mittels einer solchen mobilen Vorrichtung lässt sich unabhängig vom Fahrzeug eine mögliche Fahrtbahn des Fahrzeuges ermitteln. Es kann dann drahtlos an ein Steuergerät des Fahrzeuges übergeben werden, welches das vorgeschlagene Fahrmanöver mittels eigener Positionsdaten abgleichen kann und daraus eine Sollfahrbahn des Fahrzeuges ermittelt und ausführt.

Vorteilhafterweise ist die Positionsberechnungseinheit zur Berechnung eines Gier-Winkels mit einem Gyroskop oder einem Magnetfeldsensor oder einem Beschleunigungssensor verbunden, welche Sensordaten ausgeben, die alle drei Raumrichtungen umfassen. Mittels solcher in der mobilen Vorrichtung enthaltenen Positionssensoren lässt sich sehr genau eine dreidimensionale Positionierung der mobilen Vorrichtung sowohl in einer Startposition des Fahrzeuges als auch in einer möglichen Zielposition des Fahrzeuges angeben. Insbesondere durch die Ausrichtung der mobilen Vorrichtung in dem globalen Koordinatensystem lässt sich eindeutig die Zielposition dreidimensional ermitteln.

In einer Variante ist die Positionsbestimmungseinheit mit einem drahtlosen Ortungssystem verbunden. Unter einem solchen drahtlosen Ortungssystem sollen dabei ein Mobilfunknetz oder ein WLAN-Netz oder satellitengestützte Systeme, wie beispielsweise GPS verstanden werden. Diese sind insbesondere dann von Vorteil, wenn auf zusätzliche Sensoren in der mobilen Vorrichtung verzichtet werden soll. Alternativ können die Daten der Ortungssysteme auch zum Abgleich der, durch die Sensoren der mobilen Vorrichtung bestimmten Daten verwendet werden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche oder funktionsgleiche Teile sind mit gleichen Bezugszeichen versehen.

Es zeigen:
- Fig. 1: ein Ausführungsbeispiel für ein Fahrzeug mit einem erfindungsgemäßen Fahrerassistenzsystem,
- Fig. 2: ein Ausführungsbeispiel für ein erfindungsgemäßes mobiles Endgerät,
- Fig. 3: ein Ausführungsbeispiel für eine erfindungsgemäße Vorrichtung zum autonomen Verbringen eines Fahrzeuges in eine Zielposition,
- Fig. 4: ein Ausführungsbeispiel für eine Fahrmanöverplanung eines Kraftfahrzeuges mit einem Hänger,

- Fig. 5: ein Beispiel für eine Fahrmanöverplanung eines hängerlosen Fahrzeuges.

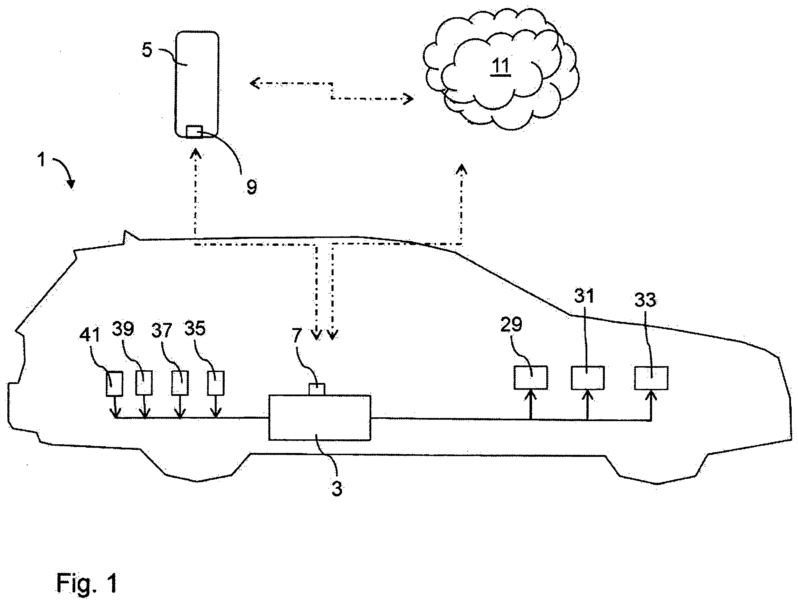

In Fig. 1 ist ein Fahrzeug 1 dargestellt, welches ein Fahrerassistenzsystem aufweist, mittels welchem das Fahrzeug 1 von einer Startposition S in eine Zielposition E, die vom Fahrzeug 1 nicht einsehbar ist, verbracht werden kann. Das Fahrerassistenzsystem umfasst ein mobiles Endgerät 5 und ein Steuergerät 3 des Fahrzeuges 1. Das Steuergerät 3 kommuniziert über eine Sende-/Empfangseinheit 7 drahtlos mit dem mobilen Endgerät 5 und einem Satelliten-Ortungssystem 11. Darüber hinaus empfängt das Steuergerät 5 Signale von fahrzeugeigenen Sensoren, wie einem Drehzahlsensor 35, einem Gyroskop 37, einem Magnetfeldsensor 39 und mindestens einem Umgebungssensor 41, beispielsweise einem Ultraschallsensor, einem Radarsensor, einem Laserscanner oder einer Kamera. Gleichzeitig gibt das Steuergerät 3 Steuerbefehle an eine Lenkeinrichtung oder eine Bremseinrichtung 31 oder eine Motorsteuerung 33 des Fahrzeuges 1 aus. Das mobile Endgerät 5 kommuniziert ebenfalls drahtlos mit dem Satellitenortungsdienst 11 über seine Sende-/Empfangseinheit 9.

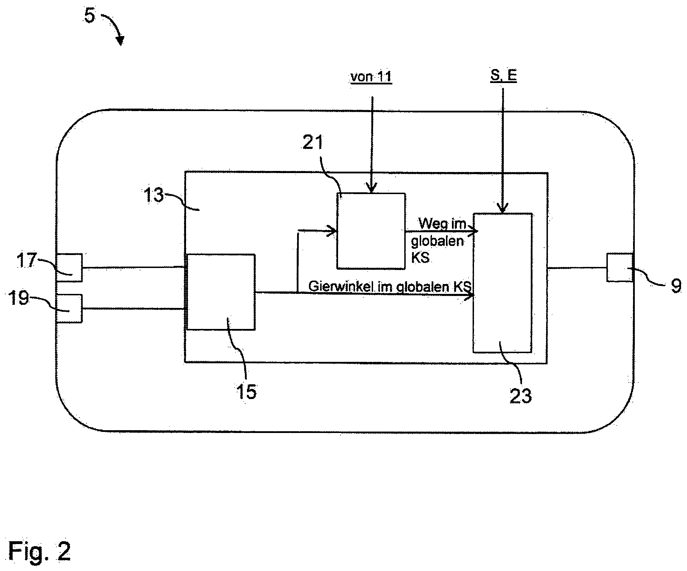

In Fig. 2 ist ein Ausführungsbeispiel eines erfindungsgemäßen mobilen Endgerätes 5 dargestellt, welches als Smartphone ausgebildet ist und eine Recheneinheit 13 umfasst. Die Recheneinheit 13 weist eine Positionsberechnungseinheit 15 auf, an welche ein Gyroskop 17 und ein Magnetfeldsensor 19 des mobilen Endgerätes 5 angeschlossen sind, um eine Ausrichtung des mobilen Endgerätes 5 in dem globalen Koordinatensystem KS zu bestimmen. Neben dem Gyroskop 17, welches in alle drei Raumrichtungen arbeitet und dem Magnetfeldsensor 19, welcher ebenfalls alle drei Raumrichtungen berücksichtigt, und die Orientierung, vergleichbar einem Kompass, im Erdmagnetfeld hat, können auch Beschleunigungssensoren in dem mobilen Endgerät 5 angeordnet sein, die die Beschleunigungen des mobilen Endgerätes 5 ebenfalls in alle drei Raumrichtungen messen.

Der so in der Positionsberechnungseinheit 15 berechnete Gierwinkel wird einer Positionsbestimmungseinheit 21 zugeführt, welche diese Position zusätzlich mit GPS-Positionsdaten oder Signalen aus Ortungsdiensten 11, wie Mobilfunk oder WLAN, abgleicht. Die Positionsbestimmung im Mobilfunknetz oder gegenüber vorhandenen WLAN-Netzen kann aber auch alternativ zu der Positionsberechnung über den Gierwinkel erfolgen. Üblich ist auch eine satellitengestützte Positionsbestimmung mit GPS.

Sowohl der von der Positionsberechnungseinheit 15 bestimmte Gierwinkel als auch ein von der Positionsbestimmungseinheit 21 bestimmter Weg werden in dem globalen Koordinatensystem KS an eine Fahrmanöverplanungseinrichtung 23 ausgegeben. In diese Fahrmanöverplanungseinrichtung 23 wird weiterhin eine von dem Fahrer markierte Startposition S und eine Endposition E eingegeben, woraus das mobile Endgerät 5 einen Plan für das Fahrmanöver des Fahrzeuges 1 von der Startposition S zur Zielposition E bestimmt, der über die Sende- / Empfangseinheit 9 an das Steuergerät 3 des Fahrzeuges 1 ausgegeben wird.

Das geplante Fahrmanöver wird dabei nur dann von dem mobilen Endgerät 5 an das Steuergerät 3 ausgegeben, wenn das mobile Endgerät 5 festgestellt hat, dass die geplante Bahn für das Fahrmanöver auch durchführbar ist.

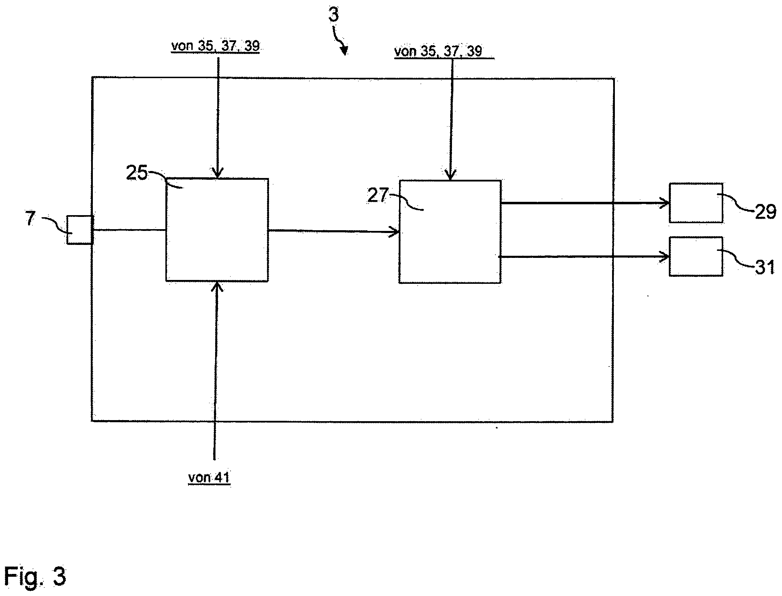

Wie in Fig. 3 dargestellt, empfängt die Sende-/Empfangseinheit 7 des Steuergerätes 3 das geplante Fahrmanöver von dem mobilen Endgerät 5. Das Steuergerät 3 umfasst eine Bahnplanungseinheit 25, in welcher von fahrzeugeigenen Sensoren 35, 37, 39 ausgegebene Parameter, wie Raddrehzahlen, die Gierrate und ein Magnetfeld, verarbeitet werden. Optional können auch Daten von Umweltsensoren 41 des Fahrzeuges 1 , wie Ultraschallsensor, Radarsensor, Laserscanner oder Kamera, erfasst werden und an die Bahnplanungseinheit 25 des Steuergerätes 3 weitergeleitet werden. In der Bahnplanungseinheit 25 wird eine Sollbahn des Fahrzeuges 1 berechnet, welches von der Startposition S zur Zielposition E verbracht werden soll. Diese Sollbahn des Fahrzeuges 1 wird an eine Bahnreglereinheit 27 ausgegeben, welche ebenfalls von fahrzeugeigenen Sensoren 31, 33, 35 Parameter, wie Raddrehzahlen, Gierwinkel und Knickwinkel, empfängt. In Abhängigkeit von diesen Parametern und der Sollbahn gibt die Bahnreglereinheit 27 Steuersignale in Form eines Solllenkwinkels an eine Lenkeinrichtung 29 des Fahrzeuges 1 und in Form einer Sollfahrgeschwindigkeit an eine Motorsteuerung 33 und/oder Bremse 31 aus.

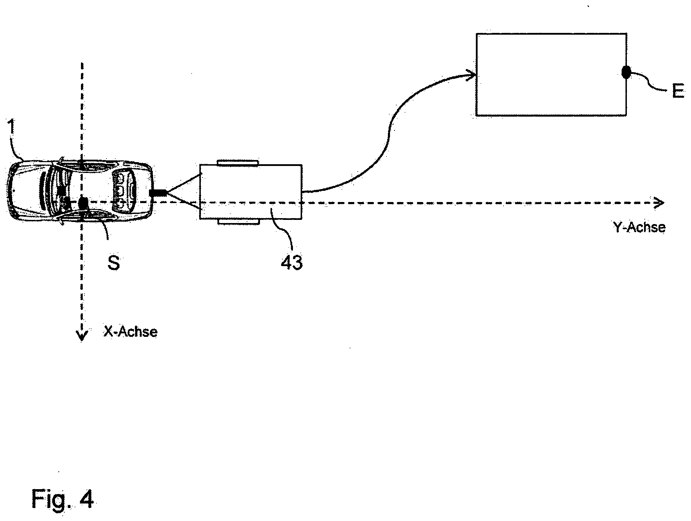

Wie in Fig. 4 verdeutlicht, liegt die Startposition S des Fahrzeuges 1 im Ursprung des globalen Koordinatensystems KS. In diesem Koordinatensystem KS wird das Fahrmanöver geplant und ausgeführt. Die Positionsbestimmung des mobilen Endgerätes 3 innerhalb des globalen Koordinatensystems erfolgt über die Sensoren des mobilen Endgerätes 5. Die Positionsbestimmung des Fahrzeuges 15 im globalen Koordinatensystem KS erfolgt über die Fahrzeug-Sensoren.

In Fig. 4 ist das Kraftfahrzeug 1 mit einem Anhänger 43 dargestellt, welcher auf einen Parkplatz verfahren werden soll, wobei die Zielposition E, also den Parkplatz, nicht durch fahrzeugeigene Sensoren erfasst werden kann. Somit ist das Fahrzeug 1 nicht in der Lage, die Zielposition E des Anhängers 43 zu bestimmen. Mit Hilfe des mobilen Endgerätes 5, beispielsweise eines Smartphones, ist es einfach, den Anhänger 43 in die gewünschte Zielposition E zu bringen. Zunächst nimmt der Fahrer im Kraftfahrzeug 1 auf dem Fahrersitz Platz und markiert die aktuelle Position des mobilen Endgerätes 5 als Startposition S für das Fahrmanöver. Alternativ kann die Startposition aber auch von dem Steuergerät 3 des Fahrzeuges 1 erfasst werden.

Erfasst der Fahrer die Startposition des Fahrmanövers auf dem Fahrersitz im Fahrzeug 1, müssen folgende Sensordaten erfasst werden:
- Ausrichtung des Fahrzeuges 1 im Erdmagnetfeld
- Ausrichtung des mobilen Endgerätes 5 im Erdmagnetfeld
- zusätzlich können Positionsdaten vom GPS oder einem anderen Ortungsdienst 11 genutzt werden.

Anschließend steigt der Fahrer aus und läuft an die gewünschte Zielposition E des Anhängers 43. Auch an dieser Stelle markiert der Fahrer den Parkplatz als Zielposition E für das Fahrmanöver auf dem mobilen Endgerät 5. Außerdem wird über die Ausrichtung des mobilen Endgerätes 1 an der Zielposition E die Ausrichtung des Hängers 43 an der Zielposition E festgelegt.

Aus dem Weg, welchen die Positionsbestimmungseinheit 21 des mobilen Endgerätes 5 von der Startposition S bis zur Endposition E aufzeichnet, wird in der Manöverplanungseinheit 23 des mobilen Endgerätes 5 ein Fahrmanöver des Fahrzeuges 1 zu geeigneten Verbringung des Hängers 43 geplant, welches an das Steuergerät 3 übertragen wird. In dem Steuergerät 3 wird eine Sollbahn des Fahrzeuges 1 in der Bahnplanungseinheit 25 bestimmt, mittels welcher der Anhänger 43 von der Startposition S in die Endposition E gebracht werden soll. Nach der Bestimmung der Sollbahn startet der Fahrer das Fahrmanöver über das mobile Endgerät 5, wobei die Bahnreglereinheit 27 die autonome Fahrt des Fahrzeuges 1 steuert und die Sollbahn anhand der Parameter der erläuterten fahrzeugeigenen Sensoren 35, 37, 39, 41 korrigiert und Steuerbefehle an die Lenkeinrichtung 29 oder die Motorsteuerung 33 oder die Bremseinrichtung 31 ausgibt. Die Bewegung des Anhängers 43 gegenüber dem Fahrzeug 1 wird mit der Hilfe eines nicht weiter dargestellten Knickwinkelsensors erfasst, welcher vorzugsweise im Kugelkopf der Anhängervorrichtung integriert ist und Signale an das Steuergerät 3 sendet. Dabei muss der Fahrer die Kreisbewegung auf einem Touchscreen des mobilen Endgerätes 5 fortlaufend durchführen, um das Fahrzeug 1 von der Startposition S bis zur Endposition E zu bewegen. Ist der Anhänger 43 in seiner Endposition E angekommen, wird dies dem Fahrer auf dem mobilen Endgerät 5 angezeigt.

Die verschiedenen Fahrbahnen, welche durch das mobile Endgerät 5 aber auch durch das Steuergerät 3 korrigiert vorgegeben werden, lassen sich nicht bloß auf dem mobilen Endgerät 3 sondern auch auf einem Display im Fahrzeug 1 anzeigen. Der Fahrer kann dabei die von ihm favorisierte Fahrmanöverbahn auswählen.

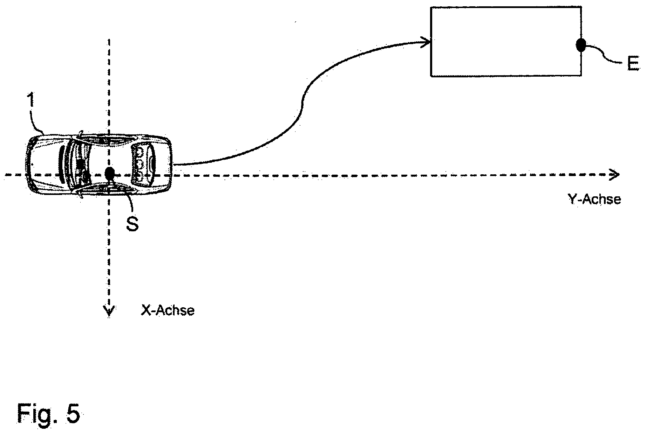

Diese Fahrmanöverplanung mit Hilfe des mobilen Endgerätes 5 ist nicht auf die Steuerung eines Gespanns aus Fahrzeug 5 und Anhänger 43 beschränkt, sondern kann auch als Erweiterung für automatisierte Parkfunktionen ohne Anhänger genutzt werden. Fig. 5 zeigt das beschriebene Fahrmanöver mit einem hängerlosen Fahrzeug 1. Wobei auch hier der Startpunkt S für das Fahrmanöver im Fahrzeug 1 liegt, der ebenfalls den Ursprung des globalen Koordinatensystems KS bildet. Nachdem der Fahrer die Startposition im Fahrzeug 1 erfasst hat, läuft er mit dem mobilen Endgerät 5 zur Zielposition E des Fahrmanövers und erfasst diese an Ort und Stelle. Dabei werden die folgenden Signale in dem mobilen Endgerät 5 von der Startposition S zur Endposition E berechnet:

Durch Integration der drei Gierraten aus dem Gyroskop 17 des mobilen Endgerätes 5 werden drei Gierwinkel im globalen Koordinatensystem KS generiert. Diese Gierwinkel beschreiben die Drehung des mobilen Endgerätes 5 im globalen Koordinatensystem KS. Zusätzlich kann der Magnetfeldsensor 19 benutzt werden, um die Gierwinkel-Berechnung zu unterstützen. Die Gierwinkel werden dazu benutzt, die drei Komponenten des Beschleunigungssensors in das globale Koordinatensystem KS umzurechnen. Durch eine zweifache Integration der drei Beschleunigungskomponenten im globalen Koordinatensystem KS kann der vom Fahrer gelaufene Weg aufgezeichnet werden. Außerdem werden GPS-Positionsdaten bzw. Positionsdaten anderer Ortungsdienste 11 genutzt, um die Wegberechnung im der Positionsbestimmungseinheit 21 zu unterstützen.

Hat der Fahrer die gewünschte Zielposition E erreicht, bestätigt er dies auf dem mobilen Endgerät 5, wodurch diese markiert wird. Anschließend hat der Fahrer auf dem mobilen Endgerät 5 die Möglichkeit, durch Drehung einer schematischen Darstellung des Fahrzeuges 1 die Ausrichtung des Fahrzeuges 2 an die Zielposition E festzulegen. Ist der Fahrer damit einverstanden, kann durch Betätigung des mobilen Endgerätes 5 das Fahrmanöver beginnen. Während des Fahrmanövers kann der Fahrer beim Abfahren des geplanten Fahrmanövers durch das Fahrzeug 1 kleine Kurskorrekturen über das mobile Endgerät 1 vorgeben, d.h. der Fahrer kann das Fahrzeug 1 um einen kleinen Versatz um die geplante Bahn verschieben.

Wie beschrieben können mit dem mobilen Endgerät 5 verschiedene Fahrmanöver geplant und dem Benutzer zur Auswahl angezeigt werden, zum Beispiel ein Ein-/Ausparken eines normalen Fahrzeuges oder ein Ein-/Ausparken mit Hänger.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert sind.

## Patentansprüche

1. Verfahren zum Verbringen eines Fahrzeuges (1) aus einer Startposition (S) in eine Zielposition (E) entlang einer im Fahrzeug (1) bestimmten Sollbahn, wobei das Abfahren der Sollbahn durch das Fahrzeug (1) oder durch ein mobiles Endgerät (5) initiiert wird, und wobei die Startposition (S) von einem mobilen Endgerät (5) oder dem Fahrzeug (1) ermittelt wird und die Zielposition (E) von dem mobilen Endgerät (5) bestimmt wird,
**dadurch gekennzeichnet, dass**
die Ausrichtung des Fahrzeugs (1) in der Zielposition über eine Ausrichtung des mobilen Endgeräts (5) in einem globalen Koordinatensystem (KS) festgelegt wird.

2. Verfahren nach Anspruch 1,
**dadurch gekennzeichnet, dass**
die Ermittlung der Start- oder Zielposition (S, E) des Fahrzeuges (1) durch einer Ereignis aktiviert und die Start- oder Zielposition (S, E) über eine Ausrichtung des mobilen Endgerätes (5) in einem globalen Koordinatensystem (KS) bestimmt wird.

3. Verfahren nach Anspruch 1 und 2,
**dadurch gekennzeichnet, dass**
die Ausrichtung des mobilen Endgerätes (5) in dem globalen Koordinatensystem (KS) mittels von dem mobilen Endgerät (5) aufgenommenen Sensordaten bestimmt wird, die an das Kraftfahrzeug (25) weitergeleitet werden.

4. Verfahren nach Anspruch 3,
**dadurch gekennzeichnet, dass**
das mobile Endgerät (5) von der Startposition (S) in die Zielposition (E) verbracht wird, wobei das mobile Endgerät (5) laufend Daten aufnimmt und für eine Fahrmanöverplanung auswertet.

5. Verfahren nach mindestens einem der vorhergehenden Ansprüche,
**dadurch gekennzeichnet, dass**
über das mobile Endgerät (5) während des Fahrmanövers des Fahrzeuges (1) Kurskorrekturen des Fahrzeuges (1) vorgenommen werden.

6. Vorrichtung zum Verbringen eines Fahrzeuges (1) aus einer Startposition (S) in eine Zielposition (E), umfassend ein Steuergerät (3), welches mit einer Lenkeinrichtung (29) und einer Motorsteuereinrichtung (33) oder einer Bremseinrichtung (31) des Fahrzeuges (1) verbunden ist, wobei
ein mobiles Endgerät (5) über eine drahtlose Kommunikationseinrichtung (7, 9) mit dem Steuergerät (3) verbunden ist, welches die Startposition (S) oder die Zielposition (E) des Fahrzeuges (1) bestimmt, und wobei das Steuergerät (3) eine Sollbahn auf der Grundlage eines von dem mobilen Endgerät (5) erstellten Fahrmanöverplan bestimmt und die Sollbahn durch Ansteuerung der Lenkeinrichtung (29) und der Motorsteuerung (33) oder der Bremseinrichtung (31) abfährt
**dadurch gekennzeichnet, dass**
die Ausrichtung des Fahrzeugs (1) in der Zielposition über eine Ausrichtung des mobilen Endgeräts (5) in einem globalen Koordinatensystem festgelegt wird..

7. Vorrichtung nach Anspruch 6,
**dadurch gekennzeichnet, dass**
das Steuergerät (3) eine Bahnreglereinheit (25) umfasst, die mit einer Positionsbestimmungseinrichtung des Steuergerätes (3) verbunden ist, welche eine Startposition (S) des Fahrzeuges (1) ermittelt.

## Claims

1. Method for conducting a vehicle (1) from a starting position (S) to a target position (E) along a set path determined in the vehicle (1), wherein the travelling of the set path is initiated by the vehicle (1) or by a mobile terminal device (5) and wherein the starting position (S) is determined by a mobile terminal device (5) or by the vehicle (1) and the target position (E) is determined by the mobile terminal device (5),
**characterised in that**
the orientation of the vehicle (1) in the target position is defined by way of an orientation of the mobile terminal device (5) in a global coordinate system (KS).

2. Method according to claim 1,
**characterised in that**
the determination of the starting or target position (S, E) of the vehicle (1) is activated by an event and the starting or target position (S, E) is determined by way of an orientation of the mobile terminal device (5) in a global coordinate system (KS).

3. Method according to claims 1 and 2,
**characterised in that**
the orientation of the mobile terminal device (5) in the global coordinate system (KS) is determined by means of sensor data recorded by the mobile terminal device (5) and transferred to the motor vehicle (25).

4. Method according to claim 3,
**characterised in that**
the mobile terminal device (5) is conducted from the starting position (S) to the target position (E), the mobile terminal device (5) continuously recording data and evaluating them for driving manoeuvre planning.

5. Method according to one or more of the preceding claims,
**characterised in that**
course corrections of the vehicle (1) are performed by way of the mobile terminal device (5) during the driving manoeuvre of the vehicle (1).

6. Device for conducting a vehicle (1) from a starting position (S) to a target position (E), the device comprising a control unit (3) connected to a steering device (29) and an engine control unit (33) or a braking device (31) of the vehicle (1), wherein
a mobile terminal device (5) is connected to the control unit (3), which determines the starting position (S) or the target position (E) of the vehicle (1), via a wireless communication device (7, 9), and wherein the control unit (3) determines a set path on the basis of a driving manoeuvre plan provided by the mobile terminal device (5) and travels the set path by activating the steering device (29) and the engine control unit (33) or the braking device (31),
**characterised in that**
the orientation of the vehicle (1) in the target position is defined by way of an orientation of the mobile terminal device (5) in a global coordinate system (KS).

7. Device according to claim 6,
**characterised in that**
the control unit (3) comprises a path controller unit (25), which is connected to a position detecting device of the control unit (3), which position detecting device detects a starting position (S) of the vehicle (1).

## Revendications

1. Procédé destiné à amener un véhicule automobile (1) d'une position de départ (S) dans une position cible (E) le long d'une trajectoire théorique définie dans un véhicule automobile (1), le départ de la trajectoire théorique est initié par le véhicule automobile (1) ou par un terminal mobile (5), et la position de départ (S) étant déterminée par un terminal mobile (5) ou par le véhicule automobile (1) et la position cible (E) étant déterminée par le terminal mobile (5), **caractérisé en ce que** l'alignement du véhicule automobile (1) dans la position cible est déterminée par un alignement du terminal mobile (5) dans un système de coordonnées global (KS).

2. Procédé selon la revendication 1, **caractérisé en ce que** la détermination de la position de départ ou cible (S, E) du véhicule automobile (1) est activée par un événement et la position de départ ou cible (S, E) est déterminée par un alignement du terminal mobile (5) dans un système de coordonnées global (KS).

3. Procédé selon la revendication 1 ou la revendication 2, **caractérisé en ce que** l'alignement du terminal mobile (5) est déterminé dans le système de coordonnées global (KS) au moyen de données de détection enregistrées par le terminal mobile (5) qui sont transmises au véhicule automobile (25).

4. Procédé selon la revendication 3, **caractérisé en ce que** le terminal mobile (5) est amené de la position de départ (S) à la position cible (E), le terminal mobile (5) enregistre en continu des données et les évalue pour une planification de manoeuvre.

5. Procédé selon au moins l'une quelconque des revendications précédentes, **caractérisé en ce que** par l'intermédiaire du terminal mobile (5) pendant la manoeuvre du véhicule automobile (1) sont effectuées des corrections de trajectoire du véhicule automobile (1).

6. Dispositif destiné à amener un véhicule automobile (1) à partir d'une position de départ (S) dans une position cible (E), comprenant une unité de commande (3) qui est connectée à un dispositif de direction (29) ou à un dispositif de commande de moteur (33) ou à un dispositif formant frein (31) du véhicule automobile (1), un terminal mobile (5) étant connecté par l'intermédiaire d'un dispositif de communication (7, 9) sans fil à l'unité de commande (3), qui détermine la position de départ (S) ou la position cible (E) du véhicule automobile (1), et l'unité de commande déterminant une trajectoire théorique sur la base d'un plan de manoeuvre réalisé par le terminal mobile (5) et la trajectoire théorique commence par la commande du dispositif de direction (29) et la commande de moteur (33) ou le dispositif formant frein (31), **caractérisé en ce que** l'alignement du véhicule automobile (1) est déterminé dans la position cible par l'intermédiaire d'un alignement du terminal mobile (5) dans un système de coordonnées global.

7. Dispositif selon la revendication 6, **caractérisé en ce que** l'unité de commande (3) comprend une unité de régulation de trajectoire (25) qui est connectée à un dispositif de détermination de position de l'unité de commande (3) qui détermine une position de départ (S) du véhicule automobile.
